# EUROPEAN PATENT APPLICATION

(11) **EP 4 757 228 A1**
(43) Date of publication of application: **10.06.2026**
(21) Application number: 24858431.0
(22) Date of filing: 22.08.2024
(51) Int. Cl.: H04L 5/00, H04W 74/00

(54) **COMMUNICATION METHOD AND COMMUNICATION APPARATUS**

(30) Priority: 02.09.2023 CN 202311138729
(71) Applicant: HUAWEI TECHNOLOGIES CO., LTD., Shenzhen 518129 (CN)
(72) Inventor: LI, Yanchun, Shenzhen, Guangdong 518129 (CN)
(74) Representative: Goddar, Heinz J.
(86) International application number: PCT/CN2024/113928
(87) International publication number: WO 2025/044889

(57) **Abstract**

This application provides a communication method and a communication apparatus. The method may be applied to the communication field. The method includes: receiving configuration information, where the configuration information includes a mapping relationship between a plurality of access points APs and a plurality of pieces of indication information, the plurality of APs include a first AP, a second AP, and at least one third AP, the plurality of pieces of indication information include first indication information and second indication information, the first indication information is used to identify a first basic service set BSS to which an AP group including the first AP and the second AP belongs, and the second indication information is used to identify a second BSS to which any third AP belongs; and performing communication based on the configuration information. According to the method, in a multi-AP coordinated transmission scenario, a station can still perform communication based on the configuration information, to avoid a decoding conflict and ambiguous identification, thereby improving performance and stability of a wireless network.

## Description

This application claims priority to Chinese Patent Application No. 202311138729.0, filed with the China National Intellectual Property Administration on September 2, 2023 and entitled "COMMUNICATION METHOD AND COMMUNICATION APPARATUS", which is incorporated herein by reference in its entirety.

### TECHNICAL FIELD

This application relates to the communication field, and more specifically, to a communication method and a communication apparatus.

### BACKGROUND

Currently, an access point (access point, AP) in the institute of electrical and electronics engineers (institute of electrical and electronics engineers, IEEE) 802.11 may use a single-AP sending manner, in other words, each AP independently contends for a channel, and sends data after completing backoff and preempting the channel through enhanced distributed channel access (enhanced distributed channel access, EDCA). After an AP preempts a channel, another AP may determine a busy/idle (busy/idle) state of the channel of the AP through channel listening, complete backoff when the channel is idle, and access the channel. A basic service set coloring (basic service set coloring, BSS Coloring) technology may be used to help the another AP determine the busy/idle state of the channel. Specifically, in the BBS coloring technology, a color field may be carried in a header of a physical layer protocol data unit (physical layer protocol data unit, PPDU) to identify a BSS to which the PPDU belongs. When the another AP detects that a color field in a PPDU sent by the AP that preempts the channel is inconsistent with a color field used by the another AP, the another AP may mark the channel state as idle. After backoff is completed, the another AP may access the channel and communicate with a corresponding station (station, STA).

However, the BSS coloring technology is applicable only to a case in which one AP corresponds to one STA. In a multi-AP coordinated transmission scenario (for example, a scenario in which a plurality of APs correspond to one STA), a decoding conflict and ambiguous identification may occur when the BSS coloring technology is applied, resulting in a reduction in performance and stability of a wireless network.

### SUMMARY

This application provides a communication method and a communication apparatus. In a multi-AP coordinated transmission scenario, a station can still perform communication based on configuration information, to avoid a decoding conflict and ambiguous identification, thereby improving performance and stability of a wireless network.

According to a first aspect, a communication method is provided. The method includes: receiving configuration information, where the configuration information includes a mapping relationship between a plurality of access points APs and a plurality of pieces of indication information, the plurality of APs include a first AP, a second AP, and at least one third AP, the plurality of pieces of indication information include first indication information and second indication information, the first indication information is used to identify a first basic service set BSS to which an AP group including the first AP and the second AP belongs, and the second indication information is used to identify a second BSS to which any third AP belongs; and performing communication based on the configuration information.

Optionally, the method may be applied to a first station STA, the third AP may be an AP that is associated with the first STA, and the first AP and the second AP may be APs that are not associated with the first STA.

Optionally, the configuration information may be sent by any one of the plurality of APs to the first STA.

Optionally, the mapping relationship between the plurality of APs and the plurality of pieces of indication information may include a mapping relationship in which one piece of indication information corresponds to a plurality of APs. For example, the first indication information may correspond to the first AP and the second AP. The mapping relationship between the plurality of APs and the plurality of pieces of indication information may alternatively include a mapping relationship in which one piece of indication information corresponds to one AP. For example, third indication information may correspond to a fourth AP, and fourth indication information may correspond to a fifth AP.

In embodiments of this application, the first STA can select a proper AP based on the configuration information for communication in a multi-AP coordinated transmission scenario. In this way, a case in which the first STA cannot perform communication due to a decoding conflict and ambiguous identification can be avoided, thereby improving performance and stability of a wireless network.

With reference to the first aspect, in some implementations of the first aspect, performing communication based on the configuration information includes: receiving a first physical layer protocol data unit PPDU, where the first PPDU includes the first indication information; and determining, based on the configuration information and the first PPDU, to perform communication with the any third AP.

Optionally, the first PPDU may be sent by the first AP or the second AP through broadcast, and a receiver of the first PPDU may be the first STA and/or a second STA. The second STA may be a STA associated with the first AP and the second AP.

Alternatively, when the second indication information is carried in the first PPDU, the first STA may determine not to perform communication with the third AP.

In this embodiment of this application, the first STA can unambiguously determine, based on the received configuration information and the first indication information included in the first PPDU, that the third AP associated with the first STA is in an idle state, and then communicate with the third AP. In this way, the first STA can avoid communicating with the third AP when the third AP is busy, to reduce a possibility of interference and a conflict in the multi-AP transmission scenario, thereby improving quality and reliability of communication. In addition, the first STA chooses, at a proper moment, to communicate with the idle third AP, so that a radio channel can be effectively used, to improve an overall network throughput.

With reference to the first aspect, in some implementations of the first aspect, the first indication information includes a first BSS color, the first BSS color corresponds to the first BSS, the second indication information includes a second BSS color, and the second BSS color corresponds to the second BSS.

In this embodiment of this application, in a multi-AP joint transmission scenario, the first indication information and the second indication information may separately include different BSS colors. In this way, different BSSs are identified by using different BSS colors, so that the first STA can determine whether to perform communication with the third AP, to avoid interference and a decoding conflict.

With reference to the first aspect, in some implementations of the first aspect, the first indication information includes a first BSS color and a first association identifier (association identifier, AID), the first AID corresponds to the first BSS, the second indication information includes the first BSS color and a second AID, the second AID corresponds to the second BSS, and the first BSS color corresponds to the first BSS and the second BSS.

In this embodiment of this application, in the multi-AP joint transmission scenario, the first indication information and the second indication information may separately include a same BSS color and different AIDs. In this way, the first STA can more accurately determine, by using the BSS color and the AID identifiers, whether to communicate with the third AP, to avoid interference and a decoding conflict.

With reference to the first aspect, in some implementations of the first aspect, the first indication information includes a first BSS color and a first bitmap, the first bitmap includes a plurality of bits, the plurality of bits correspond to the plurality of APs, and the plurality of bits are used to identify whether the plurality of APs participate in data transmission.

Optionally, a digit 1 in the bits may indicate that a corresponding AP participates in data transmission, and a digit 0 in the bits may indicate that the corresponding AP does not participate in data transmission. Participating in data transmission may also be understood as that the AP corresponding to the bit is in a busy state.

In this embodiment of this application, in the multi-AP joint transmission scenario, the first indication information may include the first BSS color and the first bitmap. In this way, the first STA can more accurately determine, by using the BSS color and the first bitmap, whether to communicate with the third AP, to avoid interference and a decoding conflict.

According to a second aspect, a communication method is provided. The method includes: sending configuration information, where the configuration information includes a mapping relationship between a plurality of APs and a plurality of pieces of indication information, the plurality of APs include a first AP, a second AP, and at least one third AP, the plurality of pieces of indication information include first indication information and second indication information, the first indication information is used to identify a first BSS to which an AP group including the first AP and the second AP belongs, and the second indication information is used to identify a second BSS to which any third AP belongs.

Optionally, the method may be applied to the first AP or the second AP, and the first AP and the second AP may be associated with a second STA.

In this embodiment of this application, the first AP or the second AP may send the configuration information through broadcast, so that after receiving the configuration information, the first STA selects a proper AP for communication by using the configuration information, thereby avoiding a case in which the first STA cannot perform communication due to a decoding conflict and ambiguous identification.

With reference to the second aspect, in some implementations of the second aspect, the method further includes: sending a first PPDU, where the first PPDU includes the first indication information.

In this embodiment of this application, the first AP or the second AP may send the first PPDU, and the first PPDU includes the first indication information, so that the first STA can unambiguously determine, based on the received configuration information and the first indication information included in the first PPDU, that the third AP associated with the first STA is in an idle state, and then communicate with the third AP.

With reference to the second aspect, in some implementations of the second aspect, the first indication information includes a first BSS color, the first BSS color corresponds to the first BSS, the second indication information includes a second BSS color, and the second BSS color corresponds to the second BSS.

In this embodiment of this application, in a multi-AP joint transmission scenario, the first indication information and the second indication information may separately include different BSS colors. In this way, different BSSs are identified by using different BSS colors, so that the first STA can determine whether to perform communication with the third AP, to avoid interference and a decoding conflict.

With reference to the second aspect, in some implementations of the second aspect, the first indication information includes a first BSS color and a first AID, the first AID corresponds to the first BSS, the second indication information includes the first BSS color and a second AID, the second AID corresponds to the second BSS, and the first BSS color corresponds to the first BSS and the second BSS.

In this embodiment of this application, in the multi-AP joint transmission scenario, the first indication information and the second indication information may separately include a same BSS color and different AIDs. In this way, the first STA can more accurately determine, by using the BSS color and the AID identifiers, whether to communicate with the third AP, to avoid interference and a decoding conflict.

With reference to the second aspect, in some implementations of the second aspect, the first indication information includes a first BSS color and a first bitmap, the first bitmap includes a plurality of bits, the plurality of bits correspond to the plurality of APs, and the plurality of bits are used to identify whether the plurality of APs participate in data transmission.

In this embodiment of this application, in the multi-AP joint transmission scenario, the first indication information may include the first BSS color and the first bitmap. In this way, the first STA can more accurately determine, by using the BSS color and the first bitmap, whether to communicate with the third AP, to avoid interference and a decoding conflict.

According to a third aspect, a communication method is provided. The method includes: determining, based on a first PPDU sent by a first AP to a second AP, a first BSS to which the first AP belongs and a second BSS to which the second AP belongs; receiving a second PPDU based on the first BSS, where the second PPDU is associated with the first AP; and receiving a third PPDU based on the second BSS, where the third PPDU is associated with the second AP.

Optionally, the communication method may be applied to the first STA. That the first AP is associated with the second PPDU may be understood as that the second PPDU may be a PPDU sent by the first AP to the first STA, and that the second AP is associated with the third PPDU may be understood as that the third PPDU may be a PPDU sent by the second AP to the first STA.

Optionally, the first STA may further determine, based on the first PPDU, the first BSS to which a plurality of APs belong and/or the second BSS to which the plurality of APs belong, and receive the second PPDU and the third PPDU respectively based on the first BSS and the second BSS.

In this embodiment of this application, the first STA can obtain, through listening, the first PPDU sent by the first AP to the second AP, and the first STA may determine, based on the first PPDU, the first BSS to which the first AP belongs and the second BSS to which the second AP belongs, and receive the second PPDU and the third PPDU based on the first BSS and the second BSS. In this way, it can be ensured that the second PPDU and the third PPDU have a same waveform, thereby avoiding mutual interference.

According to a fourth aspect, a communication method is provided. The method includes: receiving a first preamble data packet and a second preamble data packet, where the first preamble data packet and the second preamble data packet include first indication information and second indication information, the first indication information is used to identify a first BSS to which a first AP belongs, and the second indication information is used to identify a second BSS to which a second AP belongs; receiving a second PPDU based on the first preamble data packet, where the second PPDU includes the first indication information; and receiving a third PPDU based on the second preamble data packet, where the third PPDU includes the second indication information.

Optionally, the communication method may be applied to a first STA. The first preamble data packet may be sent by the first AP to the first STA, and the second preamble data packet may be sent by the second AP to the first STA. The second PPDU may be a PPDU sent by the first AP to the first STA, and the third PPDU may be sent by the second AP to the first STA.

In this embodiment of this application, the first STA can receive the second PPDU and the third PPDU based on the first preamble data packet and the second preamble data packet. In this way, it can be ensured that the second PPDU and the third PPDU have a same waveform, thereby avoiding mutual interference.

With reference to the fourth aspect, in some implementations of the fourth aspect, the first preamble data packet and the second preamble data packet may be PPDUs by using a same random seed, a same scrambling code, or a same format.

With reference to the fourth aspect, in some implementations of the fourth aspect, receiving the second PPDU includes: receiving the second PPDU in a non-omnidirectional manner; and receiving the third PPDU includes: receiving the third PPDU in the non-omnidirectional manner.

In this embodiment of this application, the first STA may receive the second PPDU and the third PPDU in the non-omnidirectional manner. In this way, an area of an overlapping zone between the first AP and the second AP can be reduced, and a probability that the first STA cannot receive the second PPDU and the third PPDU can be reduced.

According to a fifth aspect, a communication method is provided. The method includes: receiving configuration information, where the configuration information includes a mapping relationship between a plurality of APs and indication information, the plurality of APs include a first AP and at least one second AP, the plurality of pieces of indication information include first indication information and second indication information, the first indication information is used to identify a first BSS to which an AP group including the first AP and the at least one second AP belongs, and the second indication information is used to identify a second BSS to which the first AP or any second AP belongs; and performing communication based on the configuration information.

According to a sixth aspect, a communication apparatus is provided. The apparatus includes: a transceiver unit, configured to receive configuration information, where the configuration information includes a mapping relationship between a plurality of APs and a plurality of pieces of indication information, the plurality of APs include a first AP, a second AP, and at least one third AP, the plurality of pieces of indication information include first indication information and second indication information, the first indication information is used to identify a first BSS to which an AP group including the first AP and the second AP belongs, and the second indication information is used to identify a second BSS to which any third AP belongs; and a processing unit, configured to perform communication based on the configuration information.

With reference to the sixth aspect, in some implementations of the sixth aspect, the transceiver unit is further configured to receive a first PPDU, where the first PPDU includes the first indication information. The processing unit is further configured to determine, based on the configuration information and the first PPDU, to communicate with the any third AP.

With reference to the sixth aspect, in some implementations of the sixth aspect, the first indication information includes a first BSS color, the first BSS color corresponds to the first BSS, the second indication information includes a second BSS color, and the second BSS color corresponds to the second BSS.

With reference to the sixth aspect, in some implementations of the sixth aspect, the first indication information includes a first BSS color and a first AID, the first AID corresponds to the first BSS, the second indication information includes the first BSS color and a second AID, the second AID corresponds to the second BSS, and the first BSS color corresponds to the first BSS and the second BSS.

With reference to the sixth aspect, in some implementations of the sixth aspect, the first indication information includes a first BSS color and a first bitmap, the first bitmap includes a plurality of bits, the plurality of bits correspond to the plurality of APs, and the plurality of bits are used to identify whether the plurality of APs participate in data transmission.

According to a seventh aspect, a communication apparatus is provided. The apparatus includes: a transceiver unit, configured to send configuration information, where the configuration information includes a mapping relationship between a plurality of APs and a plurality of pieces of indication information, the plurality of APs include a first AP, a second AP, and at least one third AP, the plurality of pieces of indication information include first indication information and second indication information, the first indication information is used to identify a first BSS to which an AP group including the first AP and the second AP belongs, and the second indication information is used to identify a second BSS to which any third AP belongs.

With reference to the seventh aspect, in some implementations of the seventh aspect, the transceiver unit is further configured to send a first PPDU, where the first PPDU includes the first indication information.

With reference to the seventh aspect, in some implementations of the seventh aspect, the first indication information includes a first BSS color, the first BSS color corresponds to the first BSS, the second indication information includes a second BSS color, and the second BSS color corresponds to the second BSS.

With reference to the seventh aspect, in some implementations of the seventh aspect, the first indication information includes a first BSS color and a first AID, the first AID corresponds to the first BSS, the second indication information includes the first BSS color and a second AID, the second AID corresponds to the second BSS, and the first BSS color corresponds to the first BSS and the second BSS.

With reference to the seventh aspect, in some implementations of the seventh aspect, the first indication information includes a first BSS color and a first bitmap, the first bitmap includes a plurality of bits, the plurality of bits correspond to the plurality of APs, and the plurality of bits are used to identify whether the plurality of APs participate in data transmission.

According to an eighth aspect, a communication apparatus is provided. The apparatus includes: a transceiver unit, configured to receive configuration information, where the configuration information includes a mapping relationship between a plurality of APs and indication information, the plurality of APs include a first AP and at least one second AP, the plurality of pieces of indication information include first indication information and second indication information, the first indication information is used to identify a first BSS to which an AP group including the first AP and the at least one second AP belongs, and the second indication information is used to identify a second BSS to which the first AP or any second AP belongs; and a processing unit, configured to perform communication based on the configuration information.

According to a ninth aspect, a communication apparatus is provided. The apparatus includes: a processing unit, configured to determine, based on a first PPDU sent by a first AP to a second AP, a first BSS to which the first AP belongs and a second BSS to which the second AP belongs; and a transceiver unit, configured to: receive a second PPDU based on the first BSS, where the second PPDU is associated with the first AP; and receive a third PPDU based on the second BSS, where the third PPDU is associated with the second AP.

According to a tenth aspect, a communication apparatus is provided. The apparatus includes: a transceiver unit, configured to receive a first preamble data packet and a second preamble data packet, where the first preamble data packet and the second preamble data packet include first indication information and second indication information, the first indication information is used to identify a first BSS to which a first AP belongs, and the second indication information is used to identify a second BSS to which a second AP belongs; and a processing unit, configured to: receive a second PPDU based on the first preamble data packet, where the second PPDU includes the first indication information; and receive a third PPDU based on the second preamble data packet, where the third PPDU includes the second indication information.

With reference to the tenth aspect, in some implementations of the tenth aspect, the first preamble data packet and the second preamble data packet may be PPDUs by using a same random seed, a same scrambling code, or a same format.

With reference to the tenth aspect, in some implementations of the tenth aspect, the transceiver unit is specifically configured to: receive the second PPDU in a non-omnidirectional manner; and receive the third PPDU in the non-omnidirectional manner.

According to an eleventh aspect, a communication apparatus is provided, and includes at least one processor and a memory. The at least one processor is coupled to the memory, and is configured to: read and execute instructions in the memory, to enable the apparatus to implement the method according to any one of the implementations of the first aspect to the fifth aspect.

According to a twelfth aspect, a computer-readable storage medium is provided. The computer-readable storage medium stores program code. When the computer program code is run on a computer, the computer is enabled to perform the method according to any one of the implementations of the first aspect to the fifth aspect.

According to a thirteenth aspect, a chip is provided. The chip includes a circuit. The circuit is configured to perform the method according to any one of the implementations of the first aspect to the fifth aspect.

According to a fourteenth aspect, a computer program product is provided. The computer product includes a computer program. When the computer program is run, a computer is enabled to perform the method according to any one of the implementations of the first aspect to the fifth aspect.

### BRIEF DESCRIPTION OF DRAWINGS

FIG. 1 shows a network architecture of FRRT according to an embodiment of this application;
FIG. 2 shows a process in which another AP implements spatial reuse of a spectrum based on a BSS color according to an embodiment of this application;
FIG. 3 is a schematic flowchart of a communication method according to an embodiment of this application;
FIG. 4 shows a process in which a plurality of APs negotiate to use a BSS color according to an embodiment of this application;
FIG. 5 shows a process in which a plurality of APs transmit a PPDU to a STA₁ according to an embodiment of this application;
FIG. 6 is a diagram of communication performed by a STA₂ based on a BSS color according to an embodiment of this application;
FIG. 7 is a diagram of communication performed by a STA₂ based on a BSS color and an AID identifier according to an embodiment of this application;
FIG. 8 is another diagram of communication performed by a STA₂ based on a BSS color and an AID identifier according to an embodiment of this application;
FIG. 9 is a diagram of communication performed by a STA₂ based on a BSS color and a bitmap according to an embodiment of this application;
FIG. 10 is a diagram of allocation and maintenance of BSS colors of a plurality of APs according to an embodiment of this application;
FIG. 11 is a diagram of uplink transmission performed by a plurality of APs based on BSS colors according to an embodiment of this application;
FIG. 12 shows another communication method according to an embodiment of this application;
FIG. 13 shows another communication method according to an embodiment of this application;
FIG. 14 is a diagram of transmission performed by a plurality of APs in combination with a preamble data packet according to an embodiment of this application;
FIG. 15 is another diagram of transmission performed by a plurality of APs in combination with a preamble data packet according to an embodiment of this application;
FIG. 16 is another diagram of communication performed by a STA₂ based on a BSS color according to an embodiment of this application;
FIG. 17 shows a communication apparatus according to an embodiment of this application; and
FIG. 18 shows another communication apparatus according to an embodiment of this application.

### DESCRIPTION OF EMBODIMENTS

The following describes technical solutions of this application with reference to accompanying drawings.

The technical solutions in embodiments of this application may be applied to various communication systems, such as a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a future 5th generation (5th generation, 5G) system, a new radio (new radio, NR) system, or the like.

A terminal device in embodiments of this application may also be referred to as user equipment, an access terminal, a subscriber unit, a subscriber station, a mobile station, a mobile console, a remote station, a remote terminal, a mobile device, a user terminal, a terminal, a wireless communication device, a user agent, a user apparatus, or the like. Alternatively, the terminal device may be a cellular phone, a cordless phone, a session initiation protocol (Session Initiation Protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a 5G network, a terminal device in a future evolved public land mobile network (public land mobile network, PLMN), or the like. This is not limited in embodiments of this application.

A network device in embodiments of this application may be a device configured to communicate with the terminal device. The network device may be a base station (base transceiver station, BTS) in a global system for mobile communications (global system for mobile communications, GSM) or a code division multiple access (code division multiple access, CDMA) system, may be a NodeB (NodeB, NB) in a wideband code division multiple access (Wideband Code Division Multiple Access, WCDMA) system, may be an evolved NodeB (evolved NodeB, eNB or eNodeB) in an LTE system, or may be a radio controller in a cloud radio access network (cloud radio access network, CRAN) scenario; or the network device may be a relay station, an access point, a vehicle-mounted device, a wearable device, a network device in a future 5G network, a network device in a future evolved PLMN network, or the like. This is not limited in embodiments of this application.

Embodiments of this application may be applied to a wireless local area access network (wireless local area network, WLAN). The WLAN may be connected to a device by using a wireless signal (usually a radio wave), and the signal may be transmitted through a wireless access point AP or a router. The device (for example, a notebook computer, a smartphone, or a tablet computer) may have a wireless network card or a Wi-Fi adapter, and may access the Internet by establishing a connection to the AP.

The "access point AP" in this application may be an access service unit in a plurality of forms, and may control sending and receiving of a Wi-Fi signal, or implement sending and receiving of a Wi-Fi signal. For example, the access point AP includes but is not limited to a physical access point AP, that is, includes a media access control (media access control, MAC) layer, a physical (physical, PHY) layer, and a radio frequency antenna; a logical access point AP form 1, including a MAC layer and a PHY layer, and reusing a radio frequency antenna of another AP; a logical access point AP form 2, including a MAC layer, and reusing a PHY layer and a radio frequency antenna of another AP; and a logical access point AP form 3, including a radio frequency antenna, and reusing a PHY layer, a MAC layer, and the like of another AP.

A preamble in this application includes an L-STF, an L-LTF, an L-SIG, an R-L-SIG, a U-SIG, and a version-specific SIG. The U-SIG includes a version field. A content format of the U-SIG and a format of the version-specific SIG may be identified by using the version field in the U-SIG. The U-SIG further includes a BSS color field in this application. An AID may be carried in the U-SIG or the version-specific SIG.

Configuration information (the configuration information includes a mapping relationship between a plurality of access points APs and a plurality of pieces of indication information) in this application may be carried in a beacon frame, an association frame, a probe frame, or another management frame. The configuration information may be indicated to a user in a unicast, broadcast, or multicast manner.

The user may use a frame header control field of a MAC frame to carry a BSS color conflict indication, or use a management frame to carry a conflict indication. The conflict indication includes a conflict BSS color and a MAC address for which the color is used, and optionally, further includes corresponding signal strength.

Embodiments of this application may be applied to a wireless local area network, and the wireless local area network may be a BSS including an AP. It should be understood that, in a basic network structure of a Wi-Fi system, the network may include a plurality of BSSs, and each BSS may include one AP and a plurality of stations (stations, STAs) associated with the AP. In embodiments of this application, only a station is used as an example for description. This is not limited in the present invention.

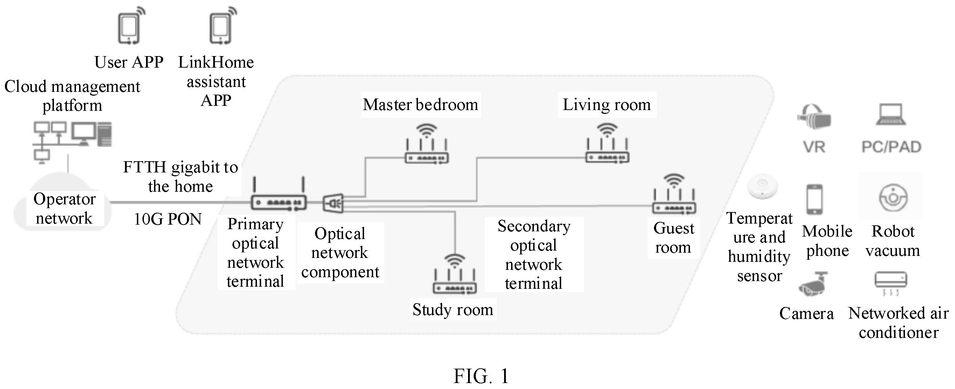

For ease of understanding of embodiments of this application, concepts and technologies used in embodiments of this application are first briefly described.
(1) STA: The STA may be a wireless communication chip, a wireless sensor, or a wireless communication terminal device. For example, the STA may be a mobile phone supporting a Wi-Fi communication function, a tablet computer supporting a Wi-Fi communication function, a set-top box supporting a Wi-Fi communication function, a smart television supporting a Wi-Fi communication function, an intelligent wearable device supporting a Wi-Fi communication function, and a computer supporting a Wi-Fi communication function. Optionally, the STA may support the 802.11ax standard. Further optionally, the STA may support Wi-Fi 8 (802.11bn standard), Wi-Fi 7 (802.11be standard), or a next-generation or next several generations of Wi-Fi standard.
(2) AP: The AP is also referred to as a wireless access point, a hotspot, or the like. The AP may provide an access service for a station, and may be an access point for a mobile user to access a wired network. The AP is mainly deployed in a family, inside a building, and inside a campus, and a typical coverage radius is tens of meters to hundreds of meters. Certainly, the AP may also be deployed outdoors. The AP is equivalent to a bridge that connects a wired network and a wireless network. A main function of the AP is to connect wireless network clients together and then connect the wireless network to the Ethernet. Currently, the AP mainly uses the IEEE 802.11 series as a standard. Specifically, the AP may be a terminal device or a network device with a Wi-Fi chip. Optionally, the AP may be a device that supports the 802.11ax standard. Further optionally, the AP may be a device that supports Wi-Fi 8 (802.11bn standard), Wi-Fi 7 (802.11be standard), or a next-generation or next several generations of Wi-Fi standard.
(3) Fiber to the room (fiber to the room, FTTR) technology: A fiber network plays an increasingly important role in supporting broadband access to a home, an office, a commercial building, a factory, and a smart city. As a home network develops, a broadband data rate and quality of service (quality of service, QoS) need to be continuously improved. For example, a media service needs to provide customers with ultra-high-definition videos such as 4K/8K videos, augmented reality (augmented reality, AR) videos, and virtual reality (virtual reality, VR) videos, and occupies a network capacity of up to a Gb/s level. Various new service requirements, including online education, telemedicine, and video conferencing, also require network quality in terms of low latency and a packet loss rate. As shown in FIG. 1, in the FTTR, an edge optical network terminal (edge optical network terminal, Edge ONT) is used to lay a fiber downstream to each room, an FTTR optical gateway is deployed at home, and the FTTR optical gateway is used as a core to connect to a plurality of edge ONTs downstream to support gigabit Ethernet ports, to implement a networking technology for full network coverage. The FTTR can provide gigabit bandwidth for each room, seamless Wi-Fi roaming, and a low-latency bearer, easily meeting people's network requirements in daily life and office work.
(4) Inter-BSS/Intra-BSS PPDU: The Inter-BSS PPDU may be a physical layer protocol data unit for wireless communication between different BSSs. The PPDU may be used for communication between different WLANs. For example, when a STA receives the inter-BSS PPDU, it may be considered that the PPDU is from a BSS that is not associated with the STA. The intra-BSS PPDU may be a physical layer protocol data unit for wireless communication performed in a same BSS. In other words, the PPDU may be used during communication between devices in a same WLAN. For example, when the STA receives the intra-BSS PPDU, it may be considered that the PPDU is from a BSS that is associated with the STA.
(5) Short interframe space (short interframe space, SIFS): The SIFS is a time interval required by a wireless device between a received frame and a response frame. In an IEEE 802.11 network, the SIFS is an interframe space maintained before and after transmission of an acknowledgment frame and a clear-to-send frame. Duration of the SIFS is usually 16 microseconds (µs).
(6) EDCA: The EDCA is a channel contention mechanism defined by Wi-Fi multimedia (Wi-Fi multimedia, WMM), and enables a high-priority packet to be preferentially sent and occupy more bandwidth.
(7) AP coordination group: The AP coordination group relates to collaboration and cooperation between a plurality of APs to improve performance and efficiency of an entire WLAN. Specifically, main functions of the AP coordination group may include: coordinating APs in the group to select different channels to reduce channel overlapping and interference, and ensuring load balancing of the APs to avoid overloading and performance deterioration.

Currently, an AP in IEEE 802.11 may use a single-AP sending manner, that is, each AP independently contends for a channel, and sends data after completing backoff and preempting the channel through EDCA. After an AP preempts a channel, another AP determines a busy/idle (busy/idle) state of the channel of the AP through channel listening, completes backoff when the channel is idle, and accesses the channel. The BSS coloring technology can help the another AP determine the busy/idle state of the channel. Specifically, in the BBS coloring technology, a color field may be carried in a header of a PPDU to identify a BSS to which the PPDU belongs. When the another AP detects that a color field in a PPDU sent by the AP that preempts the channel is inconsistent with a color field used by the another AP, the another AP may mark the channel state as idle. After backoff is completed, the another AP may access the channel and communicate with a corresponding station (station, STA).

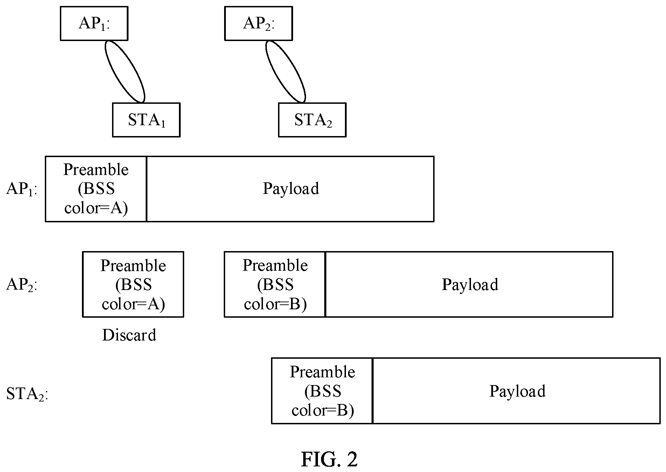

The following uses FIG. 2 as an example to describe in detail a process in which another AP implements spatial reuse of a spectrum based on a BSS color. As shown in FIG. 2, a PPDU sent by an AP₁ (the AP that preempts a channel) serves a STA₁. When detecting the PPDU, an AP2 (the another AP) finds that a BSS color field in the PPDU is inconsistent with a color field used by the AP₂. In addition, when the AP₂ detects that receive power of the PPDU is lower than an overlapping basic service set-packet detect (overlapping basic service set-packet detect, OBSS_PD) level, the AP₂ may mark a channel state as idle, and resume channel backoff. After backoff is completed, the AP₂ may access the channel and send a PPDU to a STA₂. Similarly, the STA₂ may also detect the PPDU sent by the AP₁ to the STA₁, and when finding that the BSS color field in the PPDU is inconsistent with the color field used by the AP₂, the STA₂ may access the channel and communicate with the AP₂.

However, the BSS coloring technology is applicable only to a case in which one AP corresponds to one STA. In a multi-AP coordinated transmission scenario (for example, a scenario in which a plurality of APs correspond to one STA), a decoding conflict and ambiguous identification may occur when the BSS coloring technology is applied, resulting in a reduction in performance and stability of a wireless network.

For example, in a scenario in which the STA₁ is associated with the AP₁ and the AP₂, and the STA₂ is associated with an AP₃, when the AP₁ and the AP₂ perform coordinated transmission or joint transmission, the AP₁ and the AP₂ simultaneously send PPDUs. A preamble part of a PPDU signal sent by each of the AP₁ and the AP₂ includes a BSS identifier of each of the AP₁ and the AP₂. Therefore, preamble signals of the AP₁ and the AP₂ interfere with each other, and consequently, the STA₂ cannot successfully decode BSS information. Due to the missing BSS information, the STA₂ cannot determine whether the AP₃ is busy. In this case, the STA₂ cannot effectively determine whether the STA₂ can communicate with the AP₃. For another example, in a place where APs are densely deployed, BSS colors may be repeated. As a result, the STA cannot distinguish sources of received PPDUs, causing a packet loss of a STA and a waste of power.

Embodiments of this application provide a communication method and a communication apparatus. In a multi-AP coordinated transmission scenario, a station can still perform communication based on configuration information, to avoid a decoding conflict and ambiguous identification, thereby improving performance and stability of a wireless network.

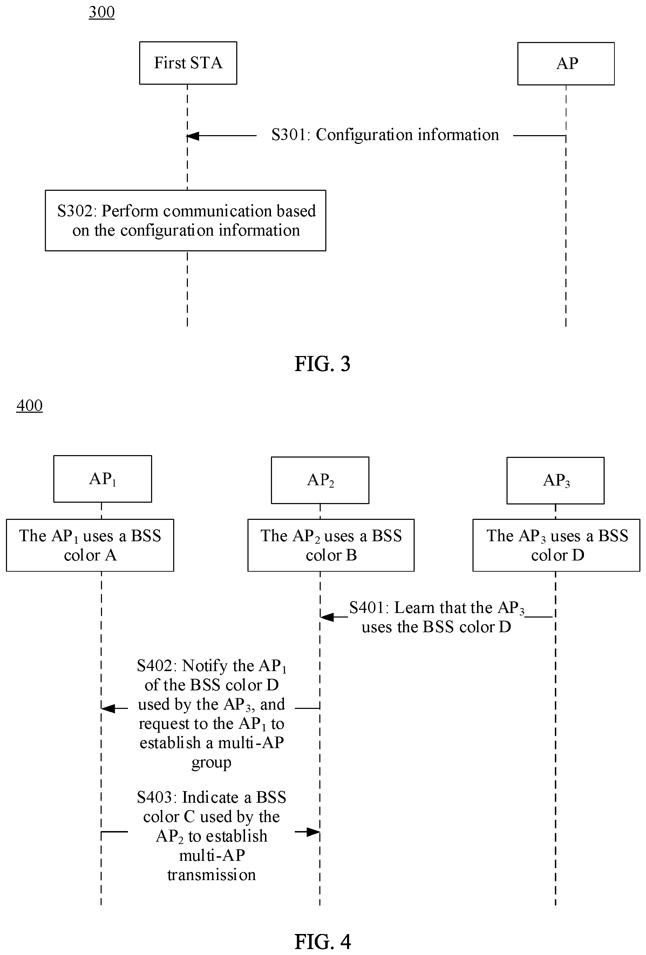

FIG. 3 is a schematic flowchart of a communication method according to an embodiment of this application. The method 300 may include step S301 and step S302.

S301: A first STA receives configuration information sent by an AP.

The configuration information includes a mapping relationship between a plurality of APs and a plurality of pieces of indication information, the plurality of APs include a first AP, a second AP, and at least one third AP, the plurality of pieces of indication information include first indication information and second indication information, the first indication information is used to identify a first BSS to which an AP group including the first AP and the second AP belongs, and the second indication information is used to identify a second BSS to which any third AP belongs.

The AP in step S301 may be any one of the plurality of APs. For example, the any one AP may be the first AP or the second AP.

Optionally, the AP group may be understood as an AP coordination group. To be specific, the first AP and the second AP may be adjacent APs, and the first AP and the second AP operate together to coordinate and manage transmission of a wireless signal, thereby improving performance and efficiency of an entire WLAN.

Optionally, the mapping relationship between the plurality of APs and the plurality of pieces of indication information may include a mapping relationship in which one piece of indication information corresponds to a plurality of APs. For example, the first indication information may correspond to the first AP and the second AP. The mapping relationship between the plurality of APs and the plurality of pieces of indication information may alternatively include a mapping relationship in which one piece of indication information corresponds to one AP. For example, third indication information may correspond to a fourth AP, and fourth indication information may correspond to a fifth AP.

The first indication information and the second indication information may identify, in different manners, BSSs to which corresponding APs belong. A specific implementation is described below. Details are not described herein.

S302: The first STA performs communication based on the configuration information.

In embodiments of this application, the first STA can select a proper AP based on the configuration information for communication in a multi-AP coordinated transmission scenario. In this way, a case in which the first STA cannot perform communication due to a decoding conflict and ambiguous identification can be avoided, thereby improving performance and stability of a wireless network.

In an embodiment, in step S302, the first STA may receive a first PPDU, where the first PPDU includes the first indication information; and the first STA may determine, based on the configuration information and the first PPDU, to communicate with the any third AP. In this way, the first STA can avoid communicating with the third AP when the third AP is busy, to reduce a possibility of interference and a conflict in the multi-AP transmission scenario, thereby improving quality and reliability of communication. In addition, the first STA chooses, at a proper moment, to communicate with the idle third AP, so that a radio channel can be effectively used, to improve an overall network throughput.

The third AP may be an AP associated with a second STA.

Optionally, the first PPDU may be sent by the first AP or the second AP through broadcast, and a receiver of the first PPDU may be the first STA and/or a second STA. The second STA may be a STA associated with the first AP and the second AP.

Alternatively, when the second indication information is carried in the first PPDU, the first STA may determine not to perform communication with the third AP.

It should be understood that, in embodiments of this application, unless otherwise stated or there is a logic conflict, terms and/or descriptions in all embodiments are consistent and may be mutually referenced, and technical features in different embodiments may be combined into a new embodiment based on an internal logical relationship thereof.

It should be further understood that, in embodiments of this application, both the AP and the STA may perform channel detection. An example in which channel detection is performed on a STA side is used for description in embodiments of this application.

The following specifically describes step S301 and step S302 in the method 300 with reference to FIG. 4 to FIG. 10. Specifically, the first STA in the method 300 may perform communication based on the plurality of pieces of indication information in the configuration information in the following manners.

### Manner 1:

The first STA may perform communication based on different BBS colors in the first indication information and the second indication information.

In a possible implementation, in the multi-AP coordinated transmission scenario, the first indication information includes a first BSS color, the first BSS color corresponds to the first BSS, the second indication information includes a second BSS color, and the second BSS color corresponds to the second BSS. In this way, different BSSs are identified by using different BSS colors, so that the first STA can determine whether to communicate with an AP associated with the first STA.

Specifically, this implementation may specifically include the following two phases.

### (1) First phase: BSS color allocation indication

In this phase, one or more APs may send a data packet of the BSS color allocation indication to a STA, to indicate a BSS color used by each AP or AP combination that participates in transmission. The data packet of the BSS color allocation indication may be the configuration information in the method 300, and the STA may include the first STA in the method 300.

For example, as shown in the following Table 1, when an AP₁ does not participate in joint transmission of a plurality of APs, in other words, the AP₁ and an AP₂ do not belong to a same AP coordination group, the AP₁ may be identified by using a BSS color A. When the AP₁ participates in joint transmission of the AP₂, in other words, the AP₁ and the AP₂ belong to the same AP coordination group, the AP₁ and the AP₂ may be identified by using a BSS color C. Similarly, when the AP₂ does not participate in joint transmission of the plurality of APs, the AP₂ may be identified by using a BSS color B. When the AP₂ participates in joint transmission of the AP₁, the AP₁ and the AP₂ may be identified by using the BSS color C. The AP₁ in the table may correspond to the first AP in the method 300, the AP₂ in the table may correspond to the second AP in the method 300, the AP₃ in the table may correspond to the third AP in the method 300, and the BSS color C may correspond to the first BSS color in the first indication information.

**Table 1**

| | AP₁ | AP₂ | AP₃ |
|---|---|---|---|
| BSS color A | √ | | |
| BSS color B | | √ | |
| BSS color C | √ | √ | |
| BSS color D | | √ | √ |
| ... | | | |

In the first phase, the one or more APs may send the data packet of the BSS color allocation indication to the STA in the following two manners.

In a possible implementation, any one of the one or more APs may send the data packet of the BSS color allocation indication shown in Table 1 to the STA.

In a possible implementation, each of the one or more APs may send, to the STA, a data packet of a BSS color allocation indication associated with the AP. For example, the AP₁ sends, to the STA, the BSS color A corresponding to a case in which the AP₁ performs independent transmission, and the BSS color C corresponding to a case in which the AP₁ participates in joint transmission of the AP₂; and the AP₂ sends, to the STA, the BSS color B corresponding to a case in which the AP₂ performs independent transmission, and the BSS color C corresponding to the case in which the AP₁ participates in joint transmission of the AP₂.

Optionally, in the first phase, the BSS color may be indicated by a BSS color allocation indication frame in the data packet, where the BSS color allocation indication frame may be a MAC frame, and a BSS color allocation data packet may be understood as a PPDU including the MAC frame.

The BSS color allocation indication frame may specifically indicate the BSS color in the following three manners.

In a possible implementation, the BSS color allocation indication frame may include at least one of the following content: a color value or an AP ID corresponding to a color value, where the ID may be represented as an AP media access control (media access control, MAC) address.

In a possible implementation, the BSS color allocation indication frame may include all used color values corresponding to one AP. For example, the BSS color allocation indication frame includes color values corresponding to the BSS color A and the BSS color C that correspond to the AP₁.

In a possible implementation, the BSS color allocation indication frame may include all used color values and masks that correspond to one AP. For example, an included color value is 0100XX, and a mask is 111100.

With reference to FIG. 4, the following specifically describes a process in which a plurality of APs negotiate to use a BSS color.

As shown in FIG. 4, the AP₁ uses the BSS color A, the AP₂ uses the BSS color B, and the AP₃ uses the BSS color D. After the AP₂ learns that the AP₃ uses the BSS color D, the AP₂ may notify the AP₁ of the case in which the AP₃ uses the BSS color D, and request to establish a multi-AP transmission group with the AP₁. After receiving the request, the AP₁ may indicate the BSS color C used by the AP₂ for establishing multi-AP transmission.

When the plurality of APs (including the AP₁, the AP₂, and the AP₃) are multi-radio devices or have a multi-link capability, the plurality of APs may uniformly or independently adjust a BSS color value on a link in each frequency band.

(2) Second phase: Use the BSS color allocation indication in data transmission.

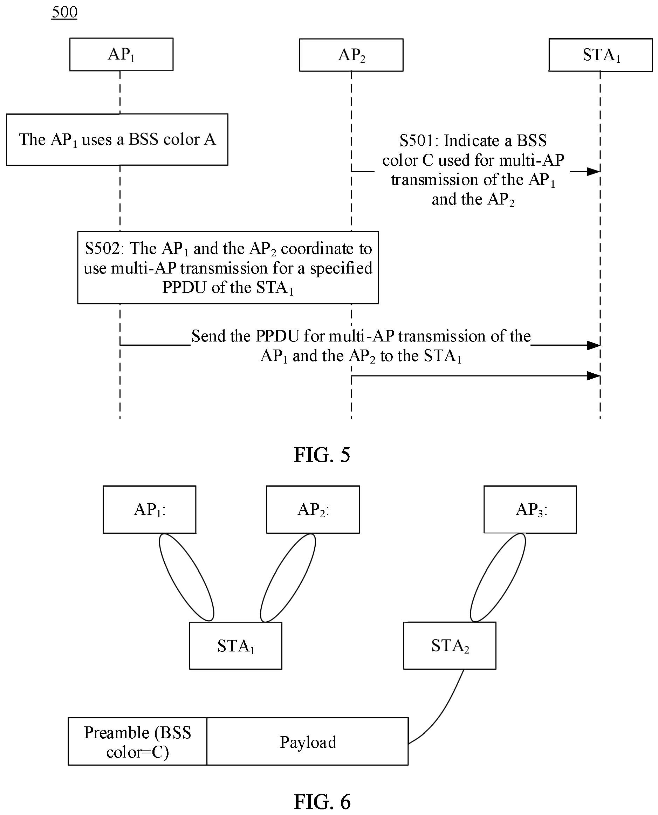

With reference to FIG. 5, the following specifically describes a process in which the plurality of APs transmit a PPDU to the STA₁. A method 500 may be performed after a method 400.

As shown in FIG. 5, the AP₂ may indicate, to the STA₁, the BSS color C used by the AP₁ and the AP₂ for multi-AP transmission. After the AP₁ and the AP₂ coordinate to use multi-AP transmission for the PPDU specified by the STA₁, the AP₁ and the AP₂ may send the PPDU for multi-AP transmission to the STA₁.

The plurality of APs (including the AP₁ and the AP₂) may include a BSS color field in HE operation element (HE operation element) information, so that the STA₁ identifies basic BSS color information.

For any AP in multi-AP transmission, at least one of the APs may indicate a BSS color of the plurality of APs to the STA₁ via an air interface. The indication may be in a UHR operation element (UHR operation element) or in a multi-AP transmission configuration element. The foregoing elements may be carried in a beacon frame, an association request/response frame, or a multi-AP transmission configuration frame.

With reference to FIG. 6, the following describes how a STA₂ determines, based on the BSS color allocation indication packet, whether to communicate with the AP₃.

As shown in FIG. 6, specifically, a BSS color may be carried in a U-SIG in a preamble of a PPDU sent by an AP to a STA. A single-stream transmission mode may be used for the U-SIG, and the single-stream transmission mode may be a cyclic delay diversity transmission manner. For example, the AP₁ and the AP₂ perform joint transmission. After receiving the preamble of the PPDU, the STA₁ in the BSS to which the AP₁ and the AP₂ belong can determine the BSS color (in FIG. 6, the BSS color is C) based on the preamble. The STA₁ may determine, based on the BSS color, that the STA₁ is served by the data packet. Therefore, the STA₁ may continue to receive data or information in the preamble and a payload. The STA₂ (corresponding to the first STA in the method 300) learns that the AP₁ and the AP₂ are in a busy state (the AP₁ and the AP₂ are serving the STA₁, and therefore, the STA₂ may not initiate uplink transmission to the AP₁ or the AP₂, or suspend EDCA channel access). In addition, the STA₂ corresponding to the AP₃ finds that the BSS color of the PPDU is C, that is, determines that the PPDU is an inter-BSS PPDU (because the PPDU relates to the AP₁, the AP₂, and users of the AP₁ and the AP₂). Therefore, the STA₂ may perform busy/idle determining based on the inter-BSS PPDU, and perform channel access after backoff is completed. That is, after learning that the AP₃ is in an idle state, the STA₂ may communicate with the AP₃.

### Manner 2:

The first STA may perform communication based on BBS colors and AIDs that are included in the first indication information and the second indication information.

In a possible implementation, in the multi-AP coordinated transmission scenario, the first indication information includes a first BSS color and a first AID, the first AID corresponds to the first BSS, the second indication information includes the first BSS color and a second AID, the second AID corresponds to the second BSS, and the first BSS color corresponds to the first BSS and the second BSS. In this way, the first STA can more accurately determine, by using the BSS colors and the AID identifiers, whether to communicate with an AP associated with the first STA.

Specifically, Manner 2 may include two implementations (1) and (2). The following provides specific descriptions.
(1) All APs may use a same BSS color for transmission, and different APs during instantaneous transmission may be identified and distinguished by using AIDs for transmission.

For example, as shown in the following Table 2, the AP₁ to the AP₃ may be identified by using the BSS color A. When the AP₁ does not participate in joint transmission of a plurality of APs, the AP₁ may be identified by using an AID₁. When the AP₁ participates in joint transmission of the AP₂, the AP₁ may be identified by using an AID₃. Similarly, when the AP₂ does not participate in joint transmission of the plurality of APs, the AP₂ may be identified by using an AID₂. When the AP₂ participates in joint transmission of the AP₁, the AP₂ may be identified by using the AID₃. The AP₁ in the table may correspond to the first AP in the method 300, the AP₂ in the table may correspond to the second AP in the method 300, and the AP₃ in the table may correspond to the third AP in the method 300. The BSS color A in the table may correspond to the first BSS color in the first indication information and the second indication information, and the AID₃ may be the first AID in the first indication information.

**Table 2**

| | AP₁ | AP₂ | AP₃ |
|---|---|---|---|
| BSS color A+AID₁ | | | |
| BSS color A+AID₂ | | | |
| BSS color A+AID₃ | | | |
| BSS color A+AID₄ | | √ | √ |
| ... | | | |

Alternatively, the AID identifier may be replaced with another identifier, for example, an ID identifying a physical transmission manner, an ID identifying a transmission link receiving and sending manner, an ID identifying a transmission memory-mapped input/output (memory-mapped I/O, MIMO) mode (whether receiving needs to be performed by a specific receiver or all receivers), or an ID identifying a plurality of BSS combination manners.

In a possible implementation, the AP may use a part of bits of an AID as extension bits of the BSS color.

For example, when the first two bits of the AID are set to 01, it may indicate that the AP₁ performs independent transmission; when the first two bits of the AID are set to 10, it may indicate that the AP₂ performs independent transmission; or when the first two bits of the AID are set to 11, it may indicate that the AP₁ and the AP₂ perform joint transmission.

It should be understood that the first two bits of the AID are used as the extension bits is merely an example for description. A quantity of bits used as the extension bits of the BSS color may be dynamically set. The dynamic setting may be related to a quantity of APs. For example, Table 2 includes four APs (the the AP₂, the AP₃, and an AP₄). When the the AP₂, and the AP₃ perform joint transmission, the first three bits of the AID may be used as the extension bits or any three bits in the AID are used as the extension bits.

Optionally, in the foregoing implementation, when the AP is associated with the STA, the AP may specify, for the STA, a position of a specific bit that is of the AID and that is used as the extension bit of the BSS color.

Optionally, when a same BSS color (for example, the BSS color is 0) is used for all joint transmission, an AID may be used to distinguish between specific AP sets. In this way, after the 11ax STA encounters a PPDU whose BSS color is 0, it may be determined that the PPDU is an intra-BSS PPDU, to avoid interference caused by multi-AP transmission.

The following specifically describes application of this implementation in data transmission.

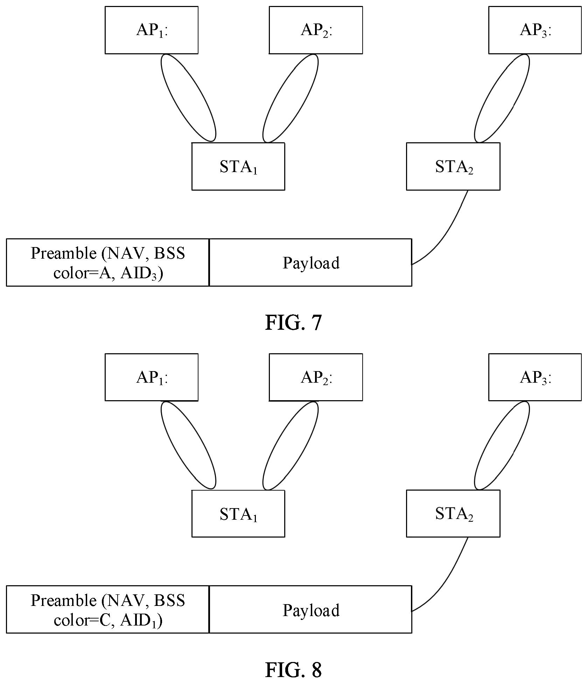

As shown in FIG. 7, for example, the AP₁ and the AP₂ perform joint transmission. After receiving a preamble of the PPDU, the STA₁ in the BSS to which the AP₁ and the AP₂ belong can determine a BSS color and an AID (in FIG. 7, the BSS color is A, and the AID is the AID₃) based on the preamble. The STA₁ may determine, based on the BSS color, that the STA₁ is served by the data packet. Therefore, the STA₁ may continue to receive data or information in the preamble and a payload. The STA₂ (corresponding to the first STA in the method 300) learns that the AP₁ and the AP₂ are in a busy state (the AP₁ and the AP₂ are serving the STA₁, and therefore, the STA₂ may not initiate uplink transmission to the AP₁ or the AP₂, or suspend EDCA channel access). In addition, the STA₂ corresponding to the AP₃ finds that the BSS color of the PPDU is A, and the AID is the AID₃. In other words, the STA₂ determines that the AP₃ is in an idle state, and may communicate with the AP₃.

(2) Each AP may use one BSS color during independent transmission, and may use another BSS color during joint transmission. Further, all APs may use a same BSS color during joint transmission, and an instantaneous AP transmission group (which relates to a plurality of APs) may be identified by using AIDs.

For example, as shown in the following Table 3, when the AP₁ performs independent transmission, the AP₁ may be identified by using the BSS color A; when the AP₂ performs independent transmission, the AP₂ may be identified by using the BSS color B; when the AP₁ and the AP₂ perform joint transmission, the AP₁ and the AP₂ may be identified by using the BSS color C and an AID₁; and when the AP₂ and the AP₃ perform joint transmission, the AP₂ and the AP₃ may be identified by using the BSS color C and an AID₂. The AP₁ in the table may correspond to the first AP in the method 300, the AP₂ in the table may correspond to the second AP in the method 300, and the AP₃ in the table may correspond to the third AP in the method 300. The BSS color C in the table may correspond to the first BSS color in the first indication information and the second indication information, and the AID₁ may be the first AID in the first indication information.

**Table 3**

| | AP₁ | AP₂ | AP₃ |
|---|---|---|---|
| BSS color A | √ | | |
| BSS color B | | √ | |
| BSS color C+AID₁ | √ | √ | |
| BSS color C+AID₂ | | √ | √ |
| ... | | | |

The following specifically describes application of this implementation in data transmission.

As shown in FIG. 8, for example, the AP₁ and the AP₂ perform joint transmission. After receiving a preamble of the PPDU, the STA₁ in the BSS to which the AP₁ and the AP₂ belong can determine a BSS color and an AID (in FIG. 8, the BSS color is C, and the AID is the AID₁) based on the preamble. The STA₁ may determine, based on the BSS color, that the STA₁ is served by the data packet. Therefore, the STA₁ may continue to receive data or information in the preamble and a payload. The STA₂ (corresponding to the first STA in the method 300) learns that the AP₁ and the AP₂ are in a busy state (the AP₁ and the AP₂ are serving the STA₁, and therefore, the STA₂ may not initiate uplink transmission to the AP₁ or the AP₂, or suspend EDCA channel access). In addition, the STA₂ corresponding to the AP₃ finds that the BSS color of the PPDU is C, and the AID is the AID₁. In other words, the STA₂ determines that the AP₃ is in an idle state, and may communicate with the AP₃.

Optionally, to enable STAs of different versions to successfully receive data, two PPDUs may be sent during joint transmission. A BSS color of a first PPDU is 0, a BSS color of a second PPDU is C, and a sending interval between two data packets is protocol-specified interval time, for example, SIFS time. In this way, after receiving the first PPDU, a legacy station determines the first PPDU as the intra-BSS PPDU, and performs intra-BSS backoff. After receiving the second PPDU, a station of a new version (for example, the first STA) that supports this application may perform specific intra-BSS/inter-BSS PPDU determining based on the BSS color C. In an implementation, the station of the new version may ignore intra-BSS PPDU determining caused by the first PPDU.

### Manner 3:

The first STA may perform communication based on a BSS color and a first bitmap that are included in the first indication information.

In a possible implementation, the first indication information includes a first BSS color and a first bitmap, the first bitmap includes a plurality of bits, the plurality of bits correspond to the plurality of APs, and the plurality of bits are used to identify whether the plurality of APs participate in data transmission. In this way, the first STA can more accurately determine, by using the BSS color and the first bitmap, whether to communicate with the third AP.

Optionally, a digit 1 in the bits may indicate that a corresponding AP participates in data transmission, and a digit 0 in the bits may indicate that the corresponding AP does not participate in data transmission. Participating in data transmission may also be understood as that the AP corresponding to the bit is in a busy state.

For example, the first bitmap is 110, where the first bit corresponds to the first AP, the second bit corresponds to the second AP, and the third bit corresponds to the third AP. In this case, the first STA may determine, based on the first bitmap, that the first AP and the second AP participate in data transmission, and the third AP does not participate in data transmission.

The following specifically describes this implementation.

For example, as shown in the following Table 4, when the AP₁ and the AP₂ perform joint transmission, the AP₁ and the AP₂ may be identified by using the BSS color C and a bitmap 110; and when the AP₂ and the AP₃ perform joint transmission, AP₂ and the AP₃ may be identified by using the BSS color C and a bitmap 011. The AP₁ in the table may correspond to the first AP in the method 300, the AP₂ in the table may correspond to the second AP in the method 300, the AP₃ in the table may correspond to the third AP in the method 300, the bitmap in the table may be the first bitmap in the method 300, and the BSS color C in the table may be the first BSS color in the first indication information.

**Table 4**

| | AP₁ | AP₂ | AP₃ |
|---|---|---|---|
| BSS color C+bitmap 110 | √ | √ | |
| BSS color C+bitmap 011 | | √ | √ |
| ... | | | |

It should be understood that a quantity of bits in the bitmap shown in Table 4 may be associated with a quantity of APs, the digit 1 in the bits may indicate that the corresponding AP participates in data transmission, and the digit 0 in the bits may indicate that the corresponding AP does not participate in data transmission.

The following specifically describes application of this implementation in data transmission.

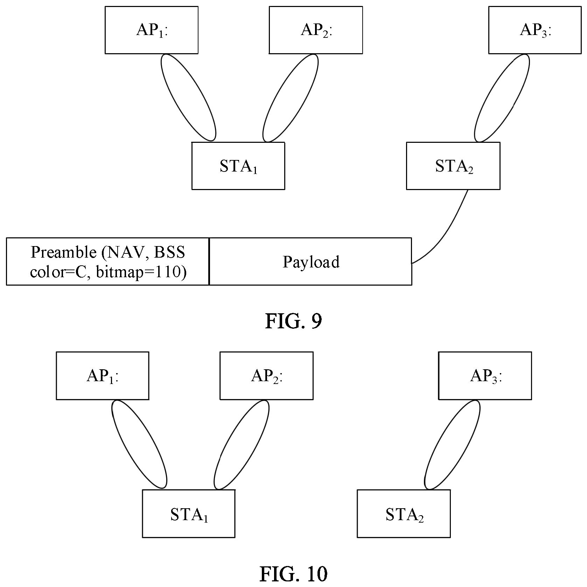

As shown in FIG. 9, for example, the AP₁ and the AP₂ perform joint transmission. After receiving a preamble of the PPDU, the STA₁ in the BSS to which the AP₁ and the AP₂ belong can determine a BSS color and an AID (in FIG. 9, the BSS color is C, and the bitmap is 110) based on the preamble. The STA₁ may determine, based on the BSS color, that the STA₁ is served by the data packet. Therefore, the STA₁ may continue to receive data or information in the preamble and a payload. The STA₂ (corresponding to the first STA in the method 300) learns that the AP₁ and the AP₂ are in a busy state (the AP₁ and the AP₂ are serving the STA₁, and therefore, the STA₂ may not initiate uplink transmission to the AP₁ or the AP₂, or suspend EDCA channel access). In addition, the STA₂ corresponding to the AP₃ finds that the BSS color of the PPDU is C, and the bitmap is 110. In other words, the STA₂ determines that the AP₃ is in an idle state, and may communicate with the AP₃.

In this embodiment of this application, the STA₂ may unambiguously determine, in a plurality of manners such as a BSS color, a BSS color and an AID, and a BSS color and a bitmap, whether the associated AP (namely, the AP₃ serving the STA) is in the busy state, so that whether to access a channel for spatial reuse can be determined. In this way, in the multi-AP coordinated transmission scenario, the decoding conflict and the unclear identifier can be avoided, thereby improving performance and stability of the wireless network.

The following describes specific allocation and maintenance manners of BSS color identifiers of a plurality of APs with reference to FIG. 10.

In an embodiment, for allocation and maintenance of the BSS color identifiers, the BSS color identifiers used by the plurality of APs should not be repeated. In addition, the APs may perform maintenance when a BSS color conflict occurs.

For example, as shown in Table 5 and FIG. 10, the AP₁ uses a color A and a color C. When the STA₁ corresponding to the AP₁ finds that the color C conflicts with another OBSS (for example, the AP₃ uses the color C), the STA₁ may notify the AP₁ of the foregoing case, so that the AP₁ negotiates with the AP₂ to update the color C used for joint transmission.

Optionally, after negotiation between the AP₁ and the AP₂, the BSS color used for joint transmission may be updated to a color (for example, a color D) different from the color C.

Optionally, after negotiation between the AP₁ and the AP₂, the BSS color used for joint transmission may be updated to a color different from the color C, and an AID identifier is added. For example, the color D+AID₁ may be obtained through update.

Optionally, after negotiation between the AP₁ and the AP₂, the BSS color used for the joint transmission may not be updated, but an AID identifier is added. For example, the color C+AID₁ may be obtained through update.

**Table 5**

| | AP₁ | AP₂ |
|---|---|---|
| BSS color A | √ | |
| BSS color B | | √ |
| BSS color C | √ | √ |
| ... | | |

In this embodiment of this application, when the BSS color conflict occurs, the AP may negotiate with another AP to update the BSS color during joint transmission. In this way, in the multi-AP coordinated transmission scenario, an identifier conflict can be avoided, thereby improving performance and stability of the wireless network.

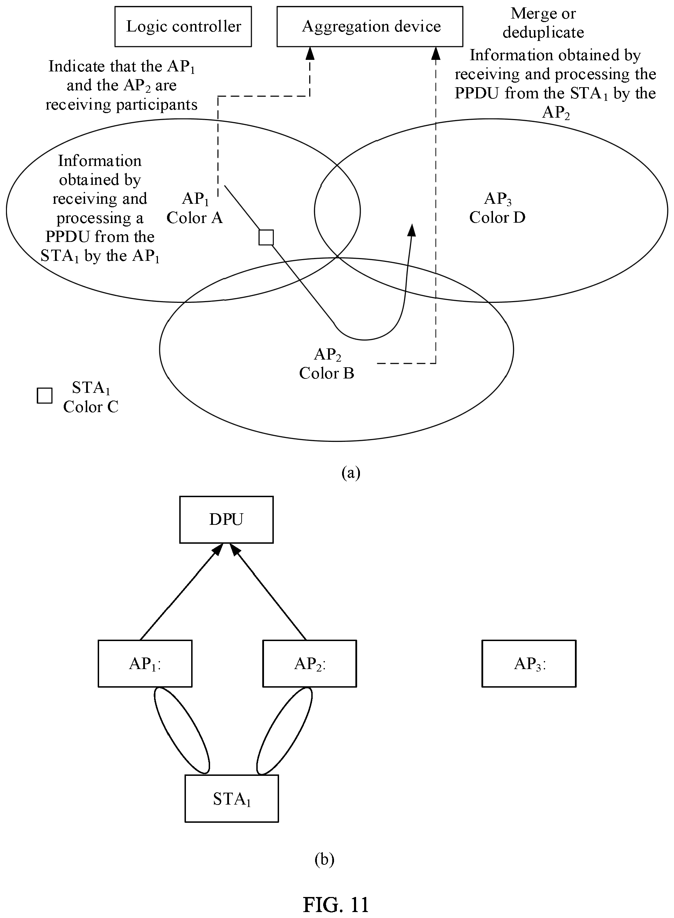

With reference to FIG. 11, the following describes a manner in which a STA performs uplink transmission based on a BSS color.

In an embodiment, in a specific case (for example, the STA is a mobile STA or a high-priority STA), a separate BSS color allocation indication may be provided for the STA. For example, a PPDU sent to a specific STA or a specific STA set uses a specified BSS color. When the STA or the STA set moves, the BSS color may be maintained. In an uplink, the AP may determine a receiving manner of an uplink signal by using a detection field, where the receiving manner of the uplink signal may include a used antenna set; or determine an AP processing entity to which a received signal is forwarded.

With reference to (a) in FIG. 11, the following specifically describes a case in which the high-priority or mobile STA uses the specified BSS color.

As shown in (a) in FIG. 11, one logic controller may coordinate at least two APs (for example, an AP₁, an AP₂, and an AP₃), and a STA₁ uses an identifier or an identifier combination (for example, Color C or Color X+AID Y) during transmission (for example, uplink transmission). The logic controller may indicate one or more of the plurality of APs as receiving participants of the PPDU sent by the STA₁. For example, the logic controller may indicate one or more APs close to the STA₁ as receiving participants, or one or more APs close to the STA₁ and have strong signals as receiving participants. The STA₁ sends the PPDU. If the APs that receive the PPDU are the receiving participants, the APs forward, to a specified aggregation device (for example, the AP₁ or another data processing device), information obtained by receiving and processing the PPDU. The aggregation device may deduplicate duplicate data packets that are received, and forward a processed data packet to a specified information receiver.

In a possible implementation, as shown in (b) in FIG. 11, during joint transmission, after the STA₁ sends the data packet to the AP₁ and the AP₂, the AP₁ and the AP₂ may send the data packet to a data processing unit (data processing unit, DPU) for unified processing.

The following describes a manner of saving power of the STA based on a BSS color.

In an embodiment, after identifying a header of the PPDU to determine homing of the data packet, the STA may ignore an unrelated PPDU over the air. For example, if an AP set corresponding to a BSS color of the PPDU does not include an AP associated with the STA, the STA may not perform data processing on a part or all of the PPDU. For another example, if an AP set corresponding to a BSS color of the PPDU includes an AP associated with the STA, but destination STA information included in the PPDU does not correspond to the STA that receives the PPDU, the STA may not perform data processing on a part or all of the PPDU.

In this embodiment of this application, in the multi-AP coordinated transmission scenario, after identifying the homing of the data packet, the STA may ignore the unrelated PPDU over the air. In this way, energy consumption overheads of the STA can be reduced, thereby prolonging a battery life of the STA.

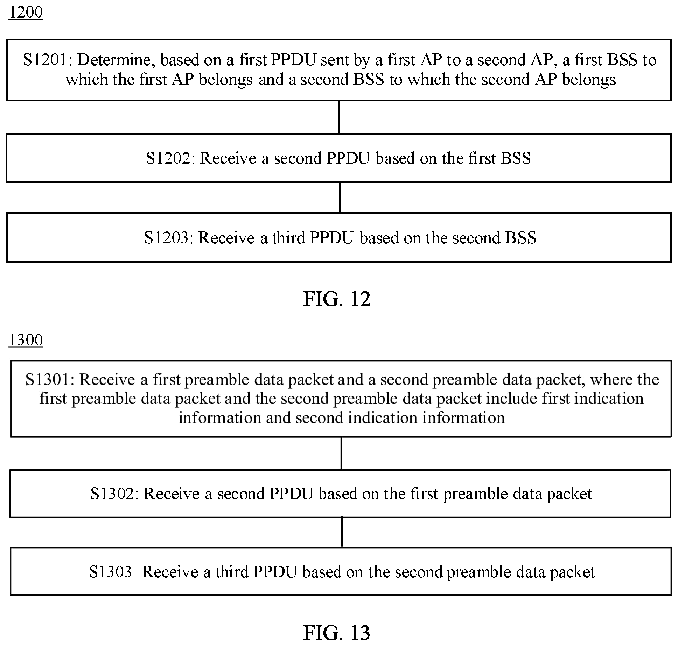

FIG. 12 shows another communication method according to an embodiment of this application. The method may be performed by a first STA. The method 1200 may include step S1201 to step S1203.

S1201: Determine, based on a first PPDU sent by a first AP to a second AP, a first BSS to which the first AP belongs and a second BSS to which the second AP belongs.

S1202: Receive a second PPDU based on the first BSS.

That the second PPDU is associated with the first AP and the first AP is associated with the second PPDU may be understood as that the second PPDU may be a PPDU sent by the first AP to the first STA.

In an embodiment, the first STA may receive the second PPDU in a non-omnidirectional manner.

S1203: Receive a third PPDU based on the second BSS.

That the third PPDU is associated with the second AP and the second AP is associated with the third PPDU may be understood as that the third PPDU may be a PPDU sent by the second AP to the first STA.

In an embodiment, the first STA may receive the third PPDU in the non-omnidirectional manner.

In an embodiment, the first STA may further determine, based on the first PPDU, the first BSS to which a plurality of APs belong and/or the second BSS to which the plurality of APs belong, and receive the second PPDU and the third PPDU respectively based on the first BSS and the second BSS.

In this embodiment of this application, the first STA can obtain, through listening, the first PPDU sent by the first AP to the second AP, and the first STA may determine, based on the first PPDU, the first BSS to which the first AP belongs and the second BSS to which the second AP belongs, and receive the second PPDU and the third PPDU based on the first BSS and the second BSS. In this way, it can be ensured that the second PPDU and the third PPDU have a same waveform, thereby avoiding mutual interference. In addition, the first STA may receive the second PPDU and the third PPDU in the non-omnidirectional manner. In this way, an area of an overlapping zone between the first AP and the second AP can be reduced, and a probability that the first STA cannot receive the second PPDU and the third PPDU can be reduced.

FIG. 13 shows another communication method according to an embodiment of this application. The method may be performed by a first STA. The method 1300 may include step S1301 to step S1303.

S1301: Receive a first preamble data packet and a second preamble data packet, where the first preamble data packet and the second preamble data packet include first indication information and second indication information.

The first indication information indicates a first BSS to which a first AP belongs, and the second indication information indicates a second BSS to which a second AP belongs.

Optionally, the first preamble data packet may be sent by the first AP to the first STA, and the second preamble data packet may be sent by the second AP to the first STA.

In an embodiment, the first preamble data packet and the second preamble data packet may be PPDUs by using a same random seed, a same scrambling code, or a same format.

S1302: Receive a second PPDU based on the first preamble data packet.

Optionally, the second PPDU may be a PPDU sent by the first AP to the first STA.

In an embodiment, the first STA may receive the second PPDU in a non-omnidirectional manner.

S1303: Receive a third PPDU based on the second preamble data packet.

Optionally, the third PPDU may be a PPDU sent by the second AP to the first STA.

In an embodiment, the first STA may receive the third PPDU in the non-omnidirectional manner.

In this embodiment of this application, the first STA can receive the second PPDU and the third PPDU based on the first preamble data packet and the second preamble data packet. In this way, it can be ensured that the second PPDU and the third PPDU have a same waveform, thereby avoiding mutual interference. In addition, the first STA may receive the second PPDU and the third PPDU in the non-omnidirectional manner. In this way, an area of an overlapping zone between the first AP and the second AP can be reduced, and a probability that the first STA cannot receive the second PPDU and the third PPDU can be reduced.

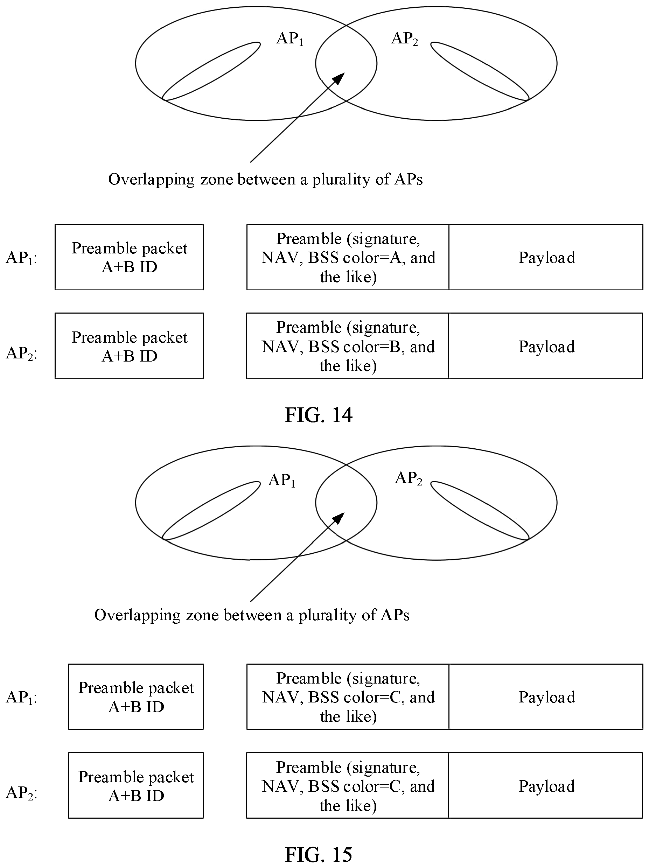

The following specifically describes step S1301 to step S1303 in the method 1300 with reference to FIG. 14 and FIG. 15.

In an embodiment, when APs uses different BSS colors, the first STA may combine preamble data packets sent by an AP₁ and an AP₂, to avoid a preamble transmission conflict. The AP₁ may be the first AP in the method 1300, and the AP₂ may be the second AP in the method 1300.

For example, as shown in FIG. 14, the AP₁ and the AP₂ may send the preamble data packets to a STA₁. The preamble data packets may directly or indirectly carry IDs of the AP₁ and the AP₂ (for example, a BSS color A corresponding to the AP₁ and a BSS color B corresponding to the AP₂). The preamble data packets may be PPDUs sent by using a random seed, a same scrambling code, or a same format. In this way, data packets subsequently sent by the AP₁ and the AP₂ may have a same waveform, thereby avoiding mutual interference. In addition, to avoid coherent cancellation of coherent waveforms over the air, the preamble data packets sent by the AP₁ and the AP₂ may have a relative delay less than orthogonal frequency division multiplexing cyclic prefix (orthogonal frequency division multiplexing cyclic prefix, OFDM CP) time.

In subsequent data packets, the data packets may be sent in the non-omnidirectional manner (for example, in a beamforming (beamforming) manner), and the AP₁ and the AP₂ mark preambles of the respective data packets by using respective BSS colors. In this way, data transmission stability can be improved. Specifically, if the data packets are sent in an omnidirectional manner, because waveforms of 11ax SIG-A symbols or Wi-Fi 7 U-SIG symbols corresponding to different BSS colors in the data packets are different, SIG symbols sent by a plurality of APs interfere with each other, and the first STA in an overlapping zone between the plurality of APs may fail to successfully receive the SIG symbols. In comparison, sending the data packets in the non-omnidirectional manner may reduce an area of an overlapping zone between the AP₁ and the AP₂, and reduce a probability that the first STA cannot perform receiving. In addition, before performing data transmission, the AP₁ and the AP₂ may first coordinate a beam direction, to reduce the area of the overlapping zone.

In an embodiment, as shown in FIG. 15, when the AP₁ and the AP₂ include a same BSS color in the preamble parts of the data packets that are subsequently sent (for example, the BSS color is C in FIG. 15, where the BSS color C does not correspond to the AP₁ and the AP₂), the first STA that receives the data packets may review, according to a protocol implementation agreement, a PPDU within specified time. The specified time may include SIFS time.

For example, the first STA reviews the preamble data packets, and finds that the preamble data packets include BSS colors A and B. In this case, the STA may communicate with the AP₁ and the AP₂ based on the preamble data packets, where the AP₁ corresponds to the BSS color A, and the AP₂ corresponds to the BSS color B.

For another example, after the AP₁ and the AP₂ send preamble data packets shown in FIG. 15, the AP₁ and the AP₂ send a first data packet and a second data packet at a first moment, and send a third data packet and a fourth data packet at a second moment. The second moment is later than the first moment, and BSS colors of the first data packet to the fourth data packet are all C. At the second moment, after reviewing the preamble data packets, the first STA finds that BSSs corresponding to the first data packet and the second data packet that correspond to the first moment are still C. In this case, the first STA may continue to review a preamble data packet.

Optionally, when the STA cannot perform determining based on the PPDU before the SIFS time, the STA may perform conservative processing, that is, consider that the data packet is a PPDU sent by an AP associated with the STA. In this case, the STA may not communicate with the associated AP.

The foregoing content describes a specific scenario in which the first STA may perform communication based on the configuration information during multi-AP transmission. The following describes another specific scenario in which the first STA performs communication based on the configuration information.

Specifically, the first STA may receive configuration information, where the configuration information includes a mapping relationship between a plurality of APs and indication information, the plurality of APs include a first AP and at least one second AP, the plurality of pieces of indication information include first indication information and second indication information, the first indication information is used to identify a first BSS to which an AP group including the first AP and the at least one second AP belongs, and the second indication information is used to identify a second BSS to which the first AP or any one of the second APs belongs; and the first STA may perform communication based on the configuration information.

For example, this implementation is described by using an example in which the AP group includes one first AP and one second AP and the first indication information and the second indication information include BSS colors.

As shown in the following Table 6, when an AP₁ performs independent transmission, the AP₁ may be identified by using a BSS color A; when an AP₂ performs independent transmission, the AP₂ may be identified by using a BSS color B; and when the AP₁ and the AP₂ perform joint transmission, the AP₁ and the AP₂ may be identified by using a BSS color C (corresponding to content identified by the first indication information). In Table 6, the AP₁ may correspond to the first AP, the AP₂ may correspond to the second AP, and the AP₁ and the AP₂ may be associated with a STA₁.

**Table 6**

| | AP₁ | AP₂ |
|---|---|---|
| BSS color A | √ | |
| BSS color B | | √ |
| BSS color C | √ | √ |

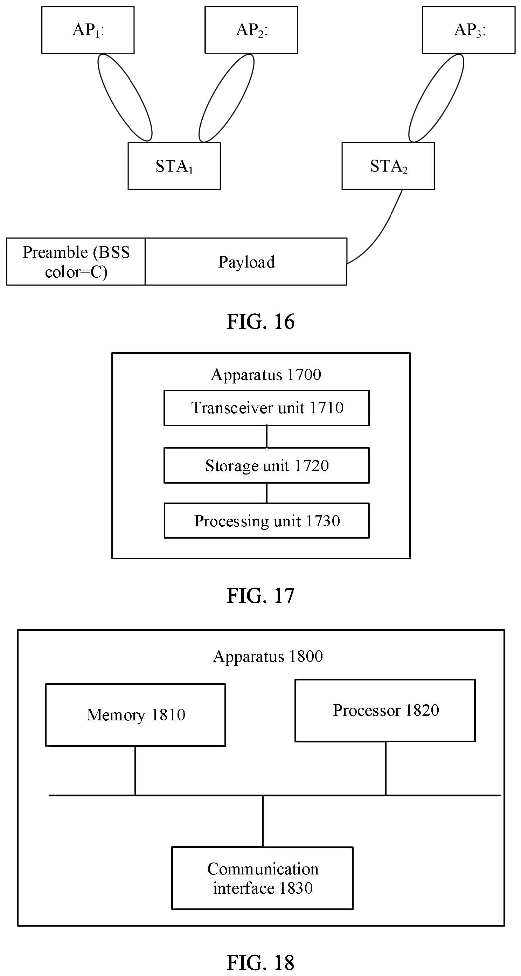

The following specifically describes application of this implementation in data transmission with reference to FIG. 16.

As shown in FIG. 16, after receiving a preamble of a PPDU, the STA₁ can determine a BSS color based on the preamble, and when the BSS color of the preamble that is of the PPDU and that is received by the STA₁ is C, the STA₁ may continue to receive data or information in the preamble and a payload. After receiving the PPDU, a STA₂ (corresponding to the first STA) learns that the AP₁ and the AP₂ are in a busy state (the AP₁ and the AP₂ are serving the STA₁, and therefore, the STA₂ may not initiate uplink transmission to the AP₁ or the AP₂, or suspend EDCA channel access). In this case, the STA₂ may communicate with an AP₃ associated with the STA₂.

Alternatively, the first indication information and the second indication information may be replaced with a plurality of manners, such as including a BSS color and an AID, and a BSS color and a bitmap.

In this embodiment of this application, when the first AP and the at least one second AP perform joint transmission, the first STA may identify a joint transmission case based on the configuration information, to perform communication. In this way, a decoding conflict and ambiguous identification can be avoided, thereby improving performance and stability of a wireless network.

The foregoing describes the communication methods provided in embodiments of this application. The following describes an apparatus and a device in embodiments of this application with reference to FIG. 17 and FIG. 18.

FIG. 17 is a diagram of a communication apparatus 1700 according to an embodiment of this application. The apparatus 1700 may include a transceiver unit 1710, a storage unit 1720, and a processing unit 1730. The transceiver unit 1710 is configured to receive or send instructions and/or data. The transceiver unit 1710 may also be referred to as a communication interface or a communication unit. The storage unit 1720 is configured to: implement a corresponding storage function, and store the corresponding instructions and/or data. The processing unit 1730 may read the instructions and/or the data in the storage unit, so that the apparatus 1700 implements the foregoing communication methods.

In a design, the apparatus 1700 may be configured to perform an action performed by the first STA in the foregoing method embodiments.

In an embodiment, the apparatus 1700 includes: a transceiver unit 1710, configured to receive configuration information, where the configuration information includes a mapping relationship between a plurality of APs and a plurality of pieces of indication information, the plurality of APs include a first AP, a second AP, and at least one third AP, the plurality of pieces of indication information include first indication information and second indication information, the first indication information is used to identify a first BSS to which an AP group including the first AP and the second AP belongs, and the second indication information is used to identify a second BSS to which any third AP belongs; and a processing unit 1730, configured to perform communication based on the configuration information.

In a possible implementation, the transceiver unit 1710 is further configured to receive a first PPDU, where the first PPDU includes the first indication information. The processing unit 1730 is further configured to determine, based on the configuration information and the first PPDU, to communicate with the any third AP.

In a possible implementation, the first indication information includes a first BSS color, the first BSS color corresponds to the first BSS, the second indication information includes a second BSS color, and the second BSS color corresponds to the second BSS.

In a possible implementation, the first indication information includes a first BSS color and a first AID, the first AID corresponds to the first BSS, the second indication information includes the first BSS color and a second AID, the second AID corresponds to the second BSS, and the first BSS color corresponds to the first BSS and the second BSS.

In a possible implementation, the first indication information includes a first BSS color and a first bitmap, the first bitmap includes a plurality of bits, the plurality of bits correspond to the plurality of APs, and the plurality of bits are used to identify whether the plurality of APs participate in data transmission.

In an embodiment, the apparatus 1700 includes: a processing unit 1730, configured to determine, based on a first PPDU sent by a first AP to a second AP, a first BSS to which the first AP belongs and a second BSS to which the second AP belongs; and a transceiver unit 1710, configured to: receive a second PPDU based on the first BSS, where the second PPDU is associated with the first AP; and receive a third PPDU based on the second BSS, where the third PPDU is associated with the second AP.

In an embodiment, the apparatus 1700 includes: a transceiver unit 1710, configured to receive a first preamble data packet and a second preamble data packet, where the first preamble data packet and the second preamble data packet include first indication information and second indication information, the first indication information is used to identify a first BSS to which a first AP belongs, and the second indication information is used to identify a second BSS to which a second AP belongs; and a processing unit 1730, configured to: receive a second PPDU based on the first preamble data packet, where the second PPDU includes the first indication information; and receive a third PPDU based on the second preamble data packet, where the third PPDU includes the second indication information.

In a possible implementation, the first preamble data packet and the second preamble data packet may be PPDUs by using a same random seed, a same scrambling code, or a same format.

In a possible implementation, the transceiver unit 1710 is specifically configured to: receive the second PPDU in a non-omnidirectional manner, and receive the third PPDU in the non-omnidirectional manner.

In an embodiment, the apparatus 1700 includes: a transceiver unit 1710, configured to receive configuration information, where the configuration information includes a mapping relationship between a plurality of APs and indication information, the plurality of APs include a first AP and at least one second AP, the plurality of pieces of indication information include first indication information and second indication information, the first indication information indicates a first BSS to which an AP group including the first AP and the at least one second AP belongs, and the second indication information indicates a second BSS to which the first AP or any second AP belongs; and a processing unit 1730, configured to perform communication based on the configuration information.

In a design, the apparatus 1700 may be configured to perform an action performed by any one of the plurality of APs in the foregoing method embodiments.

The apparatus 1700 includes: a transceiver unit 1710, configured to send configuration information, where the configuration information includes a mapping relationship between a plurality of APs and a plurality of pieces of indication information, the plurality of APs include a first AP, a second AP, and at least one third AP, the plurality of pieces of indication information include first indication information and second indication information, the first indication information is used to identify a first BSS to which an AP group including the first AP and the second AP belongs, and the second indication information is used to identify a second BSS to which any third AP belongs.

In a possible implementation, the transceiver unit 1710 is further configured to send a first PPDU, where the first PPDU includes the first indication information.

In a possible implementation, the first indication information includes a first BSS color, the first BSS color corresponds to the first BSS, the second indication information includes a second BSS color, and the second BSS color corresponds to the second BSS.

In a possible implementation, the first indication information includes a first BSS color and a first AID, the first AID corresponds to the first BSS, the second indication information includes the first BSS color and a second AID, the second AID corresponds to the second BSS, and the first BSS color corresponds to the first BSS and the second BSS.

In a possible implementation, the first indication information includes a first BSS color and a first bitmap, the first bitmap includes a plurality of bits, the plurality of bits correspond to the plurality of APs, and the plurality of bits are used to identify whether the plurality of APs participate in data transmission.

FIG. 18 is a diagram of another communication apparatus 1800 according to an embodiment of this application.

The apparatus 1800 includes a memory 1810, a processor 1820, and a communication interface 1830. The memory 1810, the processor 1820, and the communication interface 1830 are connected through an internal connection path. The memory 1810 is configured to store instructions. The processor 1820 is configured to execute the instructions stored in the memory 1810, to control the communication interface 1830 to obtain information, so that the apparatus 1800 implements the foregoing communication methods. Optionally, the memory 1810 may be coupled to the processor 1820 through an interface, or may be integrated with the processor 1820.

It should be noted that, the communication interface 1830 uses a transceiver apparatus, for example, but not limited to, a transceiver. The communication interface 1830 may further include an input/output interface (input/output interface).

The processor 1820 stores one or more computer programs, and the one or more computer programs include instructions. When the instructions are run by the processor 1820, the apparatus 1800 is enabled to perform the communication methods in the foregoing embodiments.

It should be understood that, in embodiments of this application, the processor may be a central control unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It should also be understood that, in embodiments of this application, the memory may include a read-only memory and a random access memory, and provide instructions and data to the processor. A part of the processor may further include a non-volatile random access memory. For example, the processor may further store information of a device type.

In an implementation process, the steps in the foregoing methods may be performed by using an integrated logic circuit of hardware in the processor 1820 or instructions in a form of software. The methods disclosed with reference to embodiments of this application may be directly performed by a hardware processor, or may be performed by using a combination of hardware in the processor and a software module. The software module may be located in a mature storage medium in the art, for example, a random access memory, a flash memory, a read-only memory, a programmable read-only memory, an electrically erasable programmable memory, or a register. The storage medium is located in the memory 1810. The processor 1820 reads information from the memory 1810, and completes the steps in the foregoing methods in combination with hardware of the processor. To avoid repetition, details are not described herein again.

Optionally, the communication interface 1830 in FIG. 18 may implement the transceiver unit 1710 in FIG. 17, the memory 1810 in FIG. 18 may implement the storage unit 1720 in FIG. 17, and the processor 1820 in FIG. 18 may implement the processing unit 1730 in FIG. 17.

An embodiment of this application further provides a computer-readable storage medium. The computer-readable storage medium stores program code. When the computer program code is run on a computer, the computer is enabled to perform any one of the methods in FIG. 3 to FIG. 16.

An embodiment of this application further provides a computer program product. The computer product includes a computer program. When the computer program is run, a computer is enabled to perform any one of the methods in FIG. 3 to FIG. 16.

An embodiment of this application further provides a chip, including a circuit. The circuit is configured to perform any one of the methods in FIG. 3 to FIG. 16.

A person of ordinary skill in the art may be aware that, with reference to the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it shall not be considered that the implementation goes beyond the scope of this application.

It may be clearly understood by a person skilled in the art that, for the purpose of convenient and brief description, for detailed working processes of the foregoing system, apparatuses, and units, refer to corresponding processes in the foregoing method embodiments. Details are not described herein again.

In several embodiments provided in this application, it should be understood that the disclosed system, apparatuses and methods may be implemented in other manners. For example, the described apparatus embodiments are merely examples. For example, division into the units is merely logical function division and may be other division during actual implementation. For example, a plurality of units or components may be combined or integrated into another system, or some features may be ignored or may not be performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located at one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in a form of software functional unit and sold or used as an independent product, the functions may be stored in a computer-readable storage medium. Based on such an understanding, the technical solutions of this application essentially, or the part contributing to the conventional technology, or some of the technical solutions may be implemented in a form of software product. The computer software product is stored in a storage medium, and includes several instructions for instructing a computer device (which may be a personal computer, a server, a network device, or the like) to perform all or some of the steps in the methods described in embodiments of this application. The foregoing storage medium includes any medium that can store program code, for example, a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving configuration information, wherein the configuration information comprises a mapping relationship between a plurality of access points Aps and a plurality of pieces of indication information, the plurality of APs comprise a first AP, a second AP, and at least one third AP, the plurality of pieces of indication information comprise first indication information and second indication information, the first indication information is used to identify a first basic service set BSS to which an AP group comprising the first AP and the second AP belongs, and the second indication information is used to identify a second BSS to which any third AP belongs; and
performing communication based on the configuration information.

2. The method according to claim 1, wherein performing communication based on the configuration information comprises:
receiving a first physical layer protocol data unit PPDU, wherein the first PPDU comprises the first indication information; and
determining, based on the configuration information and the first PPDU, to communicate with the any third AP.

3. The method according to claim 1 or 2, wherein the first indication information comprises a first BSS color, the first BSS color corresponds to the first BSS, the second indication information comprises a second BSS color, and the second BSS color corresponds to the second BSS.

4. The method according to claim 1 or 2, wherein the first indication information comprises a first BSS color and a first association identifier AID, the first AID corresponds to the first BSS, the second indication information comprises the first BSS color and a second AID, the second AID corresponds to the second BSS, and the first BSS color corresponds to the first BSS and the second BSS.

5. The method according to claim 1 or 2, wherein the first indication information comprises a first BSS color and a first bitmap, the first bitmap comprises a plurality of bits, the plurality of bits correspond to the plurality of APs, and the plurality of bits are used to identify whether the plurality of APs participate in data transmission.

6. A communication method, wherein the method comprises:
sending configuration information, wherein the configuration information comprises a mapping relationship between a plurality of APs and a plurality of pieces of indication information, the plurality of APs comprise a first AP, a second AP, and at least one third AP, the plurality of pieces of indication information comprise first indication information and second indication information, the first indication information is used to identify a first BSS to which an AP group comprising the first AP and the second AP belongs, and the second indication information is used to identify a second BSS to which any third AP belongs.

7. The method according to claim 6, wherein the method further comprises:
sending a first PPDU, wherein the first PPDU comprises the first indication information.

8. The method according to claim 6 or 7, wherein the first indication information comprises a first BSS color, the first BSS color corresponds to the first BSS, the second indication information comprises a second BSS color, and the second BSS color corresponds to the second BSS.

9. The method according to claim 6 or 7, wherein the first indication information comprises a first BSS color and a first AID, the first AID corresponds to the first BSS, the second indication information comprises the first BSS color and a second AID, the second AID corresponds to the second BSS, and the first BSS color corresponds to the first BSS and the second BSS.

10. The method according to claim 6 or 7, wherein the first indication information comprises a first BSS color and a first bitmap, the first bitmap comprises a plurality of bits, the plurality of bits correspond to the plurality of APs, and the plurality of bits are used to identify whether the plurality of APs participate in data transmission.

11. A communication method, wherein the method comprises:
determining, based on a first PPDU sent by a first AP to a second AP, a first BSS to which the first AP belongs and a second BSS to which the second AP belongs;
receiving a second PPDU based on the first BSS, wherein the second PPDU is associated with the first AP; and
receiving a third PPDU based on the second BSS, wherein the third PPDU is associated with the second AP.

12. A communication method, wherein the method comprises:
receiving a first preamble data packet and a second preamble data packet, wherein the first preamble data packet and the second preamble data packet comprise first indication information and second indication information, the first indication information is used to identify a first BSS to which a first AP belongs, and the second indication information is used to identify a second BSS to which a second AP belongs;
receiving a second PPDU based on the first preamble data packet, wherein the second PPDU comprises the first indication information; and
receiving a third PPDU based on the second preamble data packet, wherein the third PPDU comprises the second indication information.

13. The method according to claim 12, wherein the first preamble data packet and the second preamble data packet are PPDUs by using a same random seed, a same scrambling code, or a same format.

14. The method according to any one of claims 11 to 13, wherein receiving the second PPDU comprises:
receiving the second PPDU in a non-omnidirectional manner; and
receiving the third PPDU comprises:
receiving the third PPDU in the non-omnidirectional manner.

15. A communication apparatus, wherein the apparatus comprises:
a transceiver unit, configured to receive configuration information, wherein the configuration information comprises a mapping relationship between a plurality of APs and a plurality of pieces of indication information, the plurality of APs comprise a first AP, a second AP, and at least one third AP, the plurality of pieces of indication information comprise first indication information and second indication information, the first indication information is used to identify a first BSS to which an AP group comprising the first AP and the second AP belongs, and the second indication information is used to identify a second BSS to which any third AP belongs; and
a processing unit, configured to perform communication based on the configuration information.

16. The apparatus according to claim 15, wherein
the transceiver unit is further configured to receive a first PPDU, wherein the first PPDU comprises the first indication information; and
the processing unit is further configured to determine, based on the configuration information and the first PPDU, to communicate with the any third AP.

17. The apparatus according to claim 15 or 16, wherein the first indication information comprises a first BSS color, the first BSS color corresponds to the first BSS, the second indication information comprises a second BSS color, and the second BSS color corresponds to the second BSS.

18. The apparatus according to claim 15 or 16, wherein the first indication information comprises a first BSS color and a first AID, the first AID corresponds to the first BSS, the second indication information comprises the first BSS color and a second AID, the second AID corresponds to the second BSS, and the first BSS color corresponds to the first BSS and the second BSS.

19. The apparatus according to claim 15 or 16, wherein the first indication information comprises a first BSS color and a first bitmap, the first bitmap comprises a plurality of bits, the plurality of bits correspond to the plurality of APs, and the plurality of bits are used to identify whether the plurality of APs participate in data transmission.

20. A communication apparatus, wherein the apparatus comprises:
a transceiver unit, configured to send configuration information, wherein the configuration information comprises a mapping relationship between a plurality of APs and a plurality of pieces of indication information, the plurality of APs comprise a first AP, a second AP, and at least one third AP, the plurality of pieces of indication information comprise first indication information and second indication information, the first indication information is used to identify a first BSS to which an AP group comprising the first AP and the second AP belongs, and the second indication information is used to identify a second BSS to which any third AP belongs.

21. The apparatus according to claim 20, wherein
the transceiver unit is further configured to send a first PPDU, wherein the first PPDU comprises the first indication information.

22. The apparatus according to claim 20 or 21, wherein the first indication information comprises a first BSS color, the first BSS color corresponds to the first BSS, the second indication information comprises a second BSS color, and the second BSS color corresponds to the second BSS.

23. The apparatus according to claim 20 or 21, wherein the first indication information comprises a first BSS color and a first AID, the first AID corresponds to the first BSS, the second indication information comprises the first BSS color and a second AID, the second AID corresponds to the second BSS, and the first BSS color corresponds to the first BSS and the second BSS.

24. The apparatus according to claim 20 or 21, wherein the first indication information comprises a first BSS color and a first bitmap, the first bitmap comprises a plurality of bits, the plurality of bits correspond to the plurality of APs, and the plurality of bits are used to identify whether the plurality of APs participate in data transmission.

25. A communication apparatus, wherein the apparatus comprises:
a processing unit, configured to determine, based on a first PPDU sent by a first AP to a second AP, a first BSS to which the first AP belongs and a second BSS to which the second AP belongs; and
a transceiver unit, configured to:
receive a second PPDU based on the first BSS, wherein the second PPDU is associated with the first AP; and
receive a third PPDU based on the second BSS, wherein the third PPDU is associated with the second AP.

26. A communication apparatus, wherein the apparatus comprises:
a transceiver unit, configured to receive a first preamble data packet and a second preamble data packet, wherein the first preamble data packet and the second preamble data packet comprise first indication information and second indication information, the first indication information is used to identify a first BSS to which a first AP belongs, and the second indication information is used to identify a second BSS to which a second AP belongs; and
a processing unit, configured to:
receive a second PPDU based on the first preamble data packet, wherein the second PPDU comprises the first indication information; and
receive a third PPDU based on the second preamble data packet, wherein the third PPDU comprises the second indication information.

27. The apparatus according to claim 26, wherein the first preamble data packet and the second preamble data packet are PPDUs by using a same random seed, a same scrambling code, or a same format.

28. The apparatus according to claim 26 or 27, wherein
the transceiver unit is specifically configured to:
receive the second PPDU in a non-omnidirectional manner; and
receive the third PPDU in the non-omnidirectional manner.

29. A communication apparatus, comprising a processor and a memory, wherein the processor is coupled to the memory, and is configured to: read and execute instructions in the memory, to perform the method according to any one of claims 1 to 5.

30. A communication apparatus, comprising a processor and a memory, wherein the processor is coupled to the memory, and is configured to: read and execute instructions in the memory, to perform the method according to any one of claims 6 to 10.

31. A communication apparatus, comprising a processor and a memory, wherein the processor is coupled to the memory, and is configured to read and execute instructions in the memory, to perform the method according to any one of claims 11 to 14.

32. A computer-readable storage medium, wherein the computer-readable storage medium stores program code, and when the computer program code is run on a computer, the computer is enabled to perform the method according to any one of claims 1 to 14.

33. A chip, comprising a circuit, wherein the circuit is configured to perform the method according to any one of claims 1 to 14.
